# EUROPEAN PATENT APPLICATION

(11) **EP 1 104 203 A2**
(43) Date of publication of application: **30.05.2001**
(21) Application number: 00125060.4
(22) Date of filing: 17.11.2000
(51) Int. Cl.: H04N 17/04, H04N 5/44

(54) **Video frequency response adaptation**

(30) Priority: 29.11.1999 DE 19957354
(71) Applicant: DEUTSCHE THOMSON-BRANDT GMBH, 78048 Villingen-Schwenningen (DE)
(72) Inventor: Sowig, Helmut, 78052 Villingen-Schwenningen (DE); Sauter, Reinhard, 78052 Villingen-Schwenningen (DE)
(74) Representative: Rossmanith, Manfred, Dr.

(57) **Abstract**

The invention relates to adaptation of the video frequency response in a television set.

On account of tolerance-dictated variations - as a result of selection means such as e.g. EMC and sound traps, as a result of a tilt of the tunerband filters and as a result of surface acoustic wave filters generally used as selection means in the IF range of today's television sets - even television sets of the same type may have differences with regard to the video frequency response.

According to the invention, the video frequency response is measured for each channel of a television set (4) when corresponding antenna signals are fed into the antenna input in which case, in the event of a deviation from a predeterminable reference value, a video frequency response correction is carried out by means of corresponding frequency detuning of the relevant channel, which is stored by overwriting the frequency data for the relevant channel, or by adding a corresponding correction value to frequency data of the relevant channel in the set (4). The video signal amplitude of a 2T pulse, multiburst signal or the like is evaluated as a criterion for the assessment of the video frequency response.

## Description

The invention relates to frequency response adaptation in a set for receiving and reproducing broadcast signals.

As is known, tuning circuits and bandpass filters in the RF (Radio-Frequency)/IF (Intermediate-Frequency) range significantly influence the video frequency response of a television set, the video frequency response for its part, or its profile, on the one hand determining the picture definition impression for the picture viewer and on the other hand directly influencing the functional reliability of connected text decoders and descramblers.

On account of tolerance-dictated variations - as a result of selection means such as e.g. EMC and sound traps, as a result of a tilt of the tunerband filters and as a result of surface acoustic wave filters generally used as selection means in the IF range of today's television sets - television sets of the same type may, however, have differences with regard to the video frequency response.

The object of the invention, therefore, is to reduce such frequency response differences in television sets.

This object is achieved by means of a method specified in Claim 1, by means of a television set specified in Claim 4, and by means of a tuner tuning system specified in Claim 5.

The invention is based on the idea of compensating for tolerance-dictated variations affecting the video frequency response in the RF/IF range by means of tuner tuning in order, in particular in television sets of the same type, to enable a uniform quality with regard to the video frequency response.

According to the invention, it is greatly advantageous here that, as early as during the production of television sets, corresponding tuner tuning for a video frequency response sought can be determined, and stored, in a simple manner for each television channel of the respective set, in particular for subsequent set programme location allocations to be carried out by the customer, e.g. by means of automatic transmitter programming.

Such tuner tuning, which in principle effects frequency detuning of the tuner oscillator in this case, is not familiar to everybody, however. As is known, such detuning of the tuner oscillator results in more or less insignificant shifting of the tuner transmission curve relative to the picture IF transmission curve but significant shifting of the vision carrier on the Nyquist slope of the total transmission curve: in other words, the signal components on the "high-frequency slope" of the transmission curve are shifted correspondingly, which causes the high-frequency video signal components to be raised or lowered. In general, however, hardly any use is made of the possibility of channel fine tuning of the tuner since today's television sets in any case have at least one transmitter search with automatic tuner tuning to the television channels which can be received, the tuners being provided with PLL (phase-locked loop) based tuning systems and stored channel frequency tables.

A measurement signal designed as a 2T pulse or multiburst having a correspondingly large video frequency can advantageously be utilized as a criterion for assessment of the video frequency response, the respective vision carrier of transmitter signals to be fed into the tuner being modulated with the said measurement signal. The video frequency response is assessed e.g. using a comparison of the measured amplitude of the measurement signal with a reference amplitude (corresponds to the amplitude defined as nominal" during the development of the set for a corresponding multiburst frequency or 2T amplitude).

In order to obtain the video frequency response sought in the event of a deviation, according to the invention a correction corresponding to the deviation is performed by way of the fine tuning of the tuner. This correction value, which is added or subtracted - depending on the direction of the deviation -, is stored in the registers which are present in any case for each programme location for the channel fine tuning. In this case, it shall be pointed out here that - if the intention is to compensate for only the IF tolerances - a single correction value can be used for all of the channels. However, if the intention is also to compensate for channel-dependent tuner tolerances, then a respective correction value is provided either per channel or at least for "tolerance-jeopardized" channels.

In this case, the present invention is based on the fact that surface acoustic wave filters are generally used as selection means in the IF range of today's television sets. As is known, surface acoustic wave filters have relatively large tolerance-dictated variations. Such variations affect the video frequency response in the same way as so-called tolerance-dictated tuner tilts, which, as is known, are caused by concomitantly running or tunable, comparatively more broadband selection means included in the tuner range and, from experience, can occur in particular at the band ends and/or in the band centre of the frequency ranges which can be received.

As a result, the invention additionally has the advantage that all tolerances which occur in the signal reception range of a television set and influence the video frequency response can be compensated for. Furthermore - as already indicated - one correction value which is governed merely by a surface acoustic wave filter variation can be utilized for all channels. Further advantages of the invention emerge from the rest of the description.

The invention is explained in more detail with reference to the drawing for an exemplary embodiment, in which:
- Figures 1a - 1c: show transmission curves of a television set;
- Figure 2: shows measuring and setting means connected to a television set.

In a diagram illustration known per se, Figures la-lc schematically show tuner transmission curves 1 and picture IF transmission curves 2 with the respective position of vision carrier BT and colour subcarrier FT at e.g. 38.9 MHz and 34.47 MHz, respectively, in the so-called picture IF plane in accordance with European television standard B according to the CCIR Standard. For the sake of completeness, it shall be mentioned in this connection that vision carrier and colour subcarrier of a television channel in the so-called RF plane in each case have correspondingly standard-conforming frequency spacings from the carrier frequencies of the adjacent television channels of the same standard. The respective diagram ordinate in this case represents a measure of a normalized gain v, while the respective diagram abscissa is a measure of the frequency.

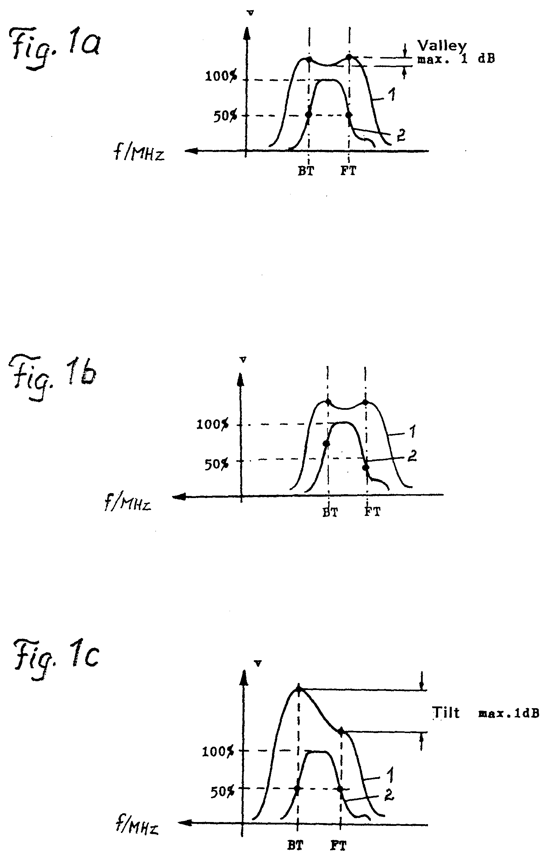

Figure 1a shows a position of a picture IF curve 2 relative to a tuner transmission curve 1, which is intended to serve as an example of a video frequency response sought. In this case, vision carrier BT and colour subcarrier FT have 50% of the maximum amplitude of 100%. On account of its frequency spacing from the vision carrier BT, the colour subcarrier FT can be used for the assessment of the video frequency response in particular with regard to high video frequencies. However, colour subcarrier FT and vision carrier BT can also assume different amplitudes, for example if a preference for high video frequency components is provided.

Assuming that the tuner transmission curve 1 has no so-called tilts or - as illustrated in Figure la - the vision carrier BT and the colour subcarrier FT have the same amplitude with regard to the tuner transmission curve 1, the amplitude ratio of vision carrier BT to colour subcarrier FT remains unchanged with regard to the IF total transmission curve (not illustrated) formed by the interaction of tuner transmission curve 1 and picture IF transmission curve 2.

Figure 1b shows a different position of the picture IF curve 2 relative to the tuner transmission curve 1, which is intended to serve as an example of the position of a picture IF curve on account of a tolerance-dictated variation of a surface acoustic wave filter (not illustrated). In such a case, the amplitude ratio of vision carrier BT to colour subcarrier FT for the video frequency sought is produced according to the invention by means of tuner tuning, which effects corresponding relative shifting of the transmission curves 1, 2 with respect to one another.

Figure 1c shows the position of the picture IF curve 2 with respect to the tuner transmission curve 1 in accordance with Figure la. In contrast to Figure 1a, however, the transmission curve 1 in this case has a maximum permissible tilt. The tilt and also the maximum permissible valley illustrated in Figure la are specified in dB (decibels) here. As a result of the interaction of the two transmission curves 1, 2, the tilt results in a correspondingly different amplitude ratio of vision carrier BT to colour subcarrier FT, with a corresponding effect on the video frequency response. According to the invention, in this case, too, the effect of the tilt is compensated for by means of the tuner tuning by corresponding relative shifting of the transmission curves 1, 2 with respect to one another and the amplitude ratio of vision carrier BT to colour subcarrier FT for the video frequency sought is thus produced.

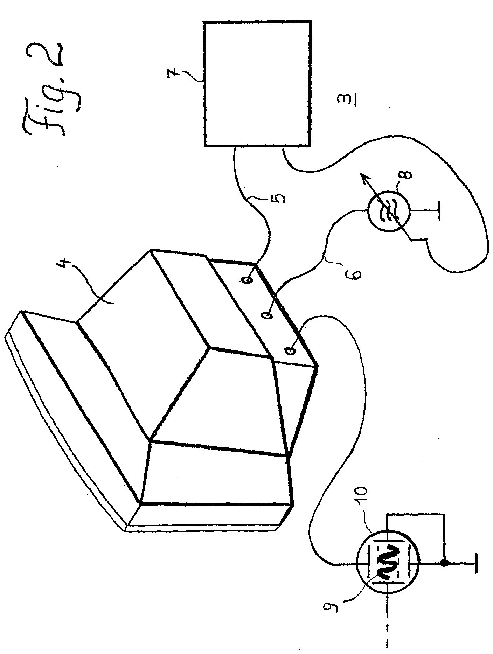

As can be gathered hereinafter on the description concerning Figure 2, it is advantageous in this case if, according to the invention, the amplitude of a 2T pulse or of a multiburst signal having correspondingly high video frequencies is measured as an indicator of the video frequency response sought, instead of the amplitude ratio of vision carrier BT to colour subcarrier FT. The amplitude of such a video signal can be measured e.g. in a simple manner at a CVBF output of a television set 4 illustrated in Figure 2.

Figure 2 shows a measuring and setting device 3 which, together with the television set 4, forms an automatic test system in particular for the production of television sets. For this purpose, the measuring and setting device 3 is connected to the television set 4 via a data and control line 5, preferably designed as an I²C bus, and also via an antenna line 6.

The measuring and setting device 3 essentially comprises a programmable control and setting unit 7 and a television transmitter 8, which can be tuned to the channel frequencies by means of the control and setting unit 7.

The television set 4 has a tuner tuning system (not illustrated) - e.g. of the type of a digital tuning system TUA 6010XS (TV mixer oscillator PLL) from Siemens, which can be controlled via an I²C bus -,which can be controlled by means of the measuring and setting device 3 via the data and control line 5.

By means of such control of the tuner tuning system connected with a corresponding signal feed into the antenna input of the television set 4, the functioning of the television set can be checked practically automatically with regard to the allocation of its programme locations and also the reception of television channels (e.g. with predeterminable picture contents). In this case, the invention provides for the video frequency response to be checked for each television channel and, if appropriate, to be corrected by means of the measuring and setting device 3 - e.g. by overwriting the frequency data of the relevant channel, or by storing a corresponding correction value which - depending on the direction of the deviation - is added to or subtracted from the frequency data of the relevant channel.

The burst amplitude of the colour subcarrier signal 9 is preferably used as a criterion for an assessment together with a setting of the video frequency response that is optionally to be performed, which burst amplitude, in the simplest case, can be measured e.g. using an oscillograph 10 to be connected to a CVBS signal output of the television set 4.

For a further development, according to the invention, a device designed as a control loop may also be provided, in which a signal which is preferably measured at a CVBS signal output of the television set 4 and is suitable for the assessment of the video frequency response is used as the controlled variable.

## Claims

1. Method for improving the picture reproduction of television sets by manipulating the video frequency response by means of tuner tuning, **characterized in that** the video frequency response is measured for each channel of a television set (4) when corresponding antenna signals are fed into the antenna input of the television set (4), in which case, in the event of a deviation from a predeterminable reference value, a video frequency response correction is carried out by means of corresponding frequency detuning of the relevant channel, which is stored by overwriting the frequency data for the relevant channel, or by adding a corresponding correction value to frequency data of the relevant channel in the set (4).

2. Method for improving the picture reproduction of a television set according to Claim 1, **characterized in that** the video signal amplitude of a 2T pulse, multiburst signal or the like is evaluated as a criterion for the assessment of the video frequency response.

3. Method for improving the picture reproduction of a television set according to Claim 1, **characterized in that** the measurement and correction of the video frequency response are carried out during set production.

4. Television set, **characterized in that**, on account of tolerance-dictated variations affecting the video frequency response in the RF/IF range of the set (4), correction of the video frequency response is provided for each channel of the set (4).

5. Tuner tuning system for carrying out the method according to Claim 1, **characterized in that** additional storage means are provided for video frequency response correction in the television set, in which storage means video frequency response correction values for the relevant channels can be stored.
